# EUROPEAN PATENT APPLICATION

(11) **EP 3 444 415 A1**
(43) Date of publication of application: **20.02.2019**
(21) Application number: 17781894.5
(22) Date of filing: 12.04.2017
(51) Int. Cl.: E04H 1/04, E04H 14/00, E04H 3/00

(54) **HIGH-RISE VILLA WITH FOREST IN CITY**

(30) Priority: 13.04.2016 CN 201610229305
(71) Applicant: Xinjiang Tiandi Group, Urumqi City, Xinjiang 830002 (CN)
(72) Inventor: ZHENG, Daqing, Urumqi Xinjiang 830002 (CN)
(74) Representative: Conti, Marco
(86) International application number: PCT/CN2017/080235
(87) International publication number: WO 2017/177918

(57) **Abstract**

The present disclosure provides an urban forest high-rise villa, which includes: outdoor garden courtyards. The outdoor garden courtyards include: lower outdoor garden courtyards and upper outdoor garden courtyards. The lower outdoor garden courtyard and the upper outdoor garden courtyard of the upper floor located immediately above the lower outdoor garden courtyard are arranged in different oration or in a staggered manner, the lower outdoor garden courtyard and the upper outdoor garden courtyard are each of a height identical to a two-story height of the urban forest high-rise villa. The floor located immediately above a window of a main room (such as living room, bedroom) and the floors located immediately above a window of a main room (such as living room, main bedroom) are not arranged with outdoor garden courtyards, to achieve direct lighting in the main room.

## Description

### CROSS-REFERENCE TO RELATED APPLICATION

This application claims the benefit and priority of Chinese Application No. 201610229305.9, filed on April 13, 2016. The entire disclosures of the application are incorporated herein by reference.

### TECHNICAL FIELD

The present disclosure relates to the field of building design and construction, in particular to an urban forest high-rise villa.

### BACKGROUND

Recently, all buildings in a city are bounded by external walls. Especially high-rise buildings, there is only one low-lying dry balcony outside the outer wall. At first glance, what people see is the building façade wall and the reinforced concrete building, making the whole city look dull and dry, and people in the buildings are isolated from the external natural environments, such as sunshine, air and sky, due to the external walls. Meanwhile, once people enter the building, it looks like that they are in a case, surrounded by walls and completely isolated from the external natural environments, such as sunshine and air. Even if there is a garden terrace, it is narrow and depressed because of limited area and height with a level identical to a floor where it is located. In addition, the people's vision is limited and insufficient external light may not enter the room. In fact, the building has the garden terrace in name only, and the living effect and feeling of the outdoor garden courtyard of the high-rise villa of the urban forest cannot be realized at all.

Along with the development of the city and the human civilization as well as the improvement of the living standards. Choosing a beautiful living environment is a new requirement for people to improve their quality of life. However, the current urban architectural characteristics have restricted the improvement of basic quality of living needs such as living space, greening, nature, sunlight, Purified air, and beautiful environmental. While suburban villas bring great inconvenience to people, such as basic necessities of life, health care, etc, because their geographical location are far from the city. And suburban villas waste a lot of land. Faced with the pressure of urban survival, it is necessary for human to seek the latest and most effective improvement and breakthrough in the field of urban architectural design.

### SUMMARY

In view of the above technical problems, the present disclosure provides an urban forest high-rise villa, which meets the requirements of urban residential quality and urban greening. Although it has better living quality than the villa, its construction and construction costs are only comparable to ordinary high-rise buildings. It has made a qualitative change in the input-output ratio of the building, which will make people completely say goodbye to the bird cage-style living era. It is a model for vertical greening and three-dimensional greening in the city. Its greening rate is more than 200% of the entire building area and more than 1000% of the building's land occupation! It will greatly increase the urban green coverage rate, completely improve the urban heat island effect, air quality, urban environment and the citizen's home environment, so that the home becomes a home and the city becomes a forest.

In one aspect, the present disclosure provides an urban forest high-rise villa, which includes: outdoor garden courtyards. The outdoor garden courtyards include: lower outdoor garden courtyards and upper outdoor garden courtyards, wherein, the lower outdoor garden courtyard of a lower floor and the upper outdoor garden courtyard of a upper floor located immediately above the lower outdoor garden courtyard are arranged in different oration or in a staggered manner, the lower outdoor garden courtyard and the upper outdoor garden courtyard are each of a height identical to a two-story height of the urban forest high-rise villa.

Preferably, the outdoor garden courtyards are cyclically arranged according to house type, number of resident and the number of floor of the urban forest high-rise villa. The lower outdoor garden courtyard of the lower floor and the upper outdoor garden courtyard of the upper floor located immediately above the lower outdoor garden courtyard are arranged in different oration is implemented by: an external wall of room of the lower floor and an external wall of room of the upper floor that located immediately above the lower floor are arranged with door-and-windows in different oration which are used to get in or out the upper outdoor courtyard and the lower outdoor courtyard.

Preferably, interior room with window at the upper floor located immediately above outdoor garden courtyard and interior room with window at the lower floor located immediately below outdoor garden courtyard are utility rooms.

Preferably, the bottom of the window of the utility room is 0.1 meters ∼1.4 meters above the floor of the utility room, a shielding plate is arranged below the window to block the downward line of sight and improve the privacy of the outdoor garden courtyard.

Preferably, the outdoor garden courtyard extends outward from the external wall by 1 to 10 meters, and is supported by a structure comprising a floor slab with a sunken type, an upstand beam, and a slanting column.

Preferably, after a floor slab with a sunken type of the outdoor garden courtyard is leveled, the floor slab has a waterproof slope in the direction of the exterior wall of the villa, and a drain port is arranged at a space close to the wall with the lowest slope.

Preferably, a floor slab of the outdoor garden courtyard is arranged with permanent waterproof layer, and a waterproof protective layer of 3 cm ∼ 5 cm of fine stone is arranged on the waterproof layer, to prevent roots from falling underneath, destroying the waterproof layer.

Preferably, in a structure comprising a floor slab with a sunken type and an upstand beam of the outdoor garden courtyard, there is a height difference between the bottom of the floor slab and the top of the upstand beam, for backfilling soil and planting flowers and trees.

Preferably, the urban forest high-rise villa includes one of flowers and trees, garden courtyard road, landscape and leisure platform.

Preferably, the flowers and trees includes: big trees, low plants, shrubs and flowers, wherein, the height of the big trees is from 3 meter to 5 meter. An upward tree pool with a size of 0.2-1 meter is arranged under each big tree to increase the thickness of soil layer, the height of the low plants, shrubs and flowers is from 0.1meter to 3meter.

Preferably, each outdoor garden courtyard is planted with 2-6 trees of 3 to 5 meters, 20 to 100 trees of 1 to 2 meters, and 100 to 400 plants of less than 1 meter, and several plants and flowers, each big tree is planted close to the outer wall and its trunk is fixed on the outer wall.

Preferably, an area of outdoor garden courtyard is between 20 square meters and 120 square meters, and protective railing is provided at the outer edge of the garden courtyard.

Preferably, the urban forest garden high-rise villa is provided with an automatic trickling or sprinkling system and a drainage system.

Preferably, the lower outdoor garden courtyard is at odd-numbered floor, the upper outdoor garden courtyard is at even-numbered floor.

Preferably, the urban forest high-rise villais one of residential, apartment, restaurant, hotel, guesthouse and office building.

According to the embodiments of the present disclosure, due to the novel external wall and the novel layout at each floor, it is able to completely utilize the whole external wall of the building, thereby to enable the gardens to be viewed from the outside, with the external wall being rarely exposed. As compared with the traditional building where a one-story garden is provided, it is able for the building with a two-story garden in the present disclosure to improve the spatial comfort degree, the natural lighting and the visual field. As compared with the traditional building where a two-story garden is provided but many windows are arranged above the garden, it is able for the building in the present disclosure to improve the privacy.

Compared with traditional buildings, urban forest high-rise villas can be built anywhere in the city center without increasing building space. Most of traditional villas are built in very remote suburbs, it brings great difficulties to people's life, work, study, medical care, etc.

Three major defects (such as the garden courtyard can be seen by the left neighbor, the right neighbor, the upper and the below neighbor, can be climbed over, has no privacy, no sense of security, the main rooms are black houses and other drawbacks) that have not be overcame by similar buildings at home and abroad are overcame. The outdoor garden courtyards of the urban forest high-rise villas can't be seen by any neighbors, and can't be climbed over. The outdoor garden courtyards are privacy and security, and main room of the outdoor garden courtyards is sight direct. Black houses are avoided.

An urban forest high-rise villa looks like a lush mountain peak, a building like a forest and a natural oxygen bar. The urban forest high-rise villa is like a forest and a natural oxygen bar.

An area of ten acres of green gardens can be built on an acre of land, making the value of the land ten times more valuable. The urban forest high-rise makes every household have both an indoor house and a garden with flowers and trees outside.

The urban forest high-rise disclosed in this application is a green and environmentally-friendly building that is more innovative and humane than all traditional buildings. Sky garden courtyard is built. And it completely breaks the shackles of people's

Outer walls and makes full use of 100% of exterior walls of all buildings. Every household has a two-story and three-sided oversized courtyard in the air. Families can grow vegetables, plant flowers, walk dogs, raise birds, get together enjoy party dinner, and breathe freshly bathe in the sun and enjoy the world outside in this private courtyard.

The urban forest high-rise disclosed in this application will be a major revolution in the history of human architecture. Just like the brick house eliminating the thatched house, the urban forest high-rise will completely eliminate the current birdcage house in the future, and a new era of living will be created.

The urban high-rise villas will surely be widely sought after and loved by people. In the current situation of the overcrowding of traditional bird cages, the urban high-rise villas will provide a new economic development momentum for the real estate industry. The urban high-rise villas will definitely drive the city's new round of investment, construction and consumption enthusiasm and overall growth in GDP and employment.

### BRIEF DESCRIPTION OF THE DRAWINGS

FIGURE 1 is a schematic view showing the location relationship of the upper outdoor garden courtyard and the lower outdoor garden courtyard;
FIGURE 2 is a schematic view showing the lower outdoor garden courtyard;
FIGURE 3 is a schematic view showing the upper outdoor garden courtyard;
FIGURE 4 is a schematic view showing elevation diagram of the upper outdoor garden courtyard and the lower outdoor garden courtyard;
FIGURE 5 is a schematic views showing the outdoor garden courtyard at upper floor and lower floor after trees are planted;
FIGURE 6 is a schematic view showing the outdoor garden courtyard is supported by a structure comprising a floor slab with a sunken type, an upstand beam, and a slanting column;
FIGURE 7 is a schematic view showing a floor having two department;
FIGURE 8 is a schematic view showing a floor having three department;
FIGURE 9 is a schematic view showing a floor having four department;
FIGURE 10 is a schematic view showing a floor having six department;

It should be appreciated that, although without the drawings concerning the buildings having one or five apartments at each floor, the number of the apartments at the odd-numbered floor or the even-numbered floor is not particularly defined herein. In addition, the number, the sizes and areas of the apartments at each floor may be adjustable in accordance with practical needs.

### Reference Sign List

1 lower outdoor garden courtyard
2 upper outdoor garden courtyard
3 door-and-window between the living room and the outdoor garden courtyard at the lower floor
4 door-and-window between the living room and the outdoor garden courtyard at the upper floor
5 window of main room (be sight directly)
6 window of main room (be sight directly)
7 window of utility room (worker's room) (a shielding plate is arranged at the floor located immediately above outdoor garden courtyard)
8 window of utility room (kitchen) (a shielding plate is arranged at the floor located immediately above outdoor garden courtyard)
9 shielding plate
10 slanting column supporting outdoor garden courtyard
11 reinforced concrete floor slab and upstand beam of outdoor garden courtyard
12 flowers and trees planted in the lower outdoor garden courtyard
13 flowers and trees planted in the upper outdoor garden courtyard
14 protective railing of outdoor garden courtyard

### DETAILED DESCRIPTION

As required, detailed embodiments of the present invention are disclosed herein; however, it is to be understood that the disclosed embodiments are merely exemplary of the invention that may be embodied in various and alternative forms. The figures are not necessarily to scale; some features may be exaggerated or minimized to show details of particular components. Therefore, specific structural and functional details disclosed herein are not to be interpreted as limiting, but merely as a representative basis for teaching one skilled in the art to variously employ the present invention.

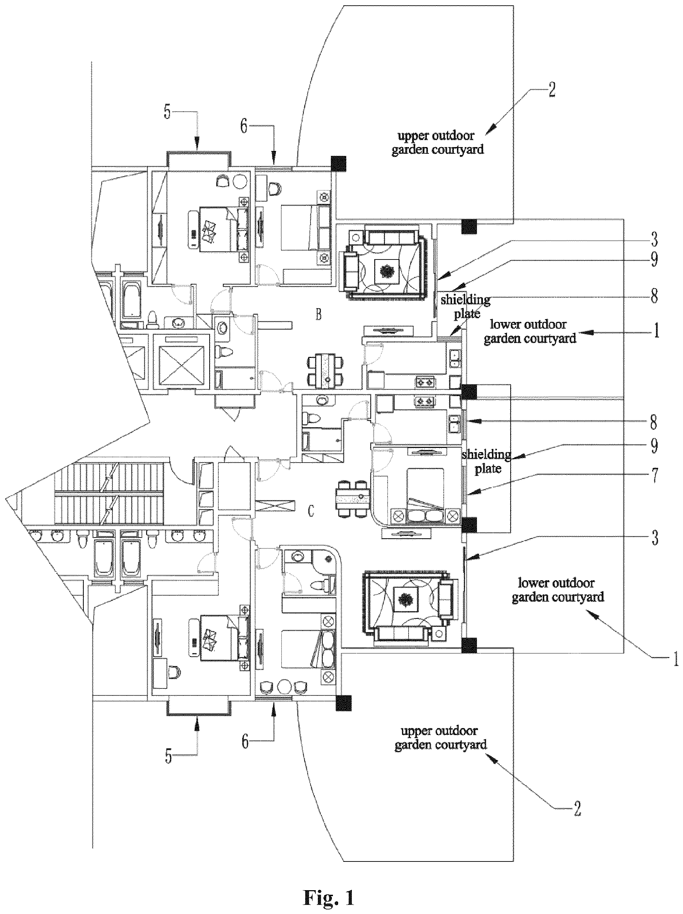

Referring to Figures 1, the present disclosure provides an urban forest high-rise villa, which includes outdoor garden courtyards, and the outdoor garden courtyards include lower outdoor garden courtyards 1 and upper outdoor garden courtyards 2. The lower outdoor garden courtyard of a lower floor and the upper outdoor garden courtyard of a upper floor located immediately above the lower outdoor garden courtyard are arranged in different oration or in a staggered manner.

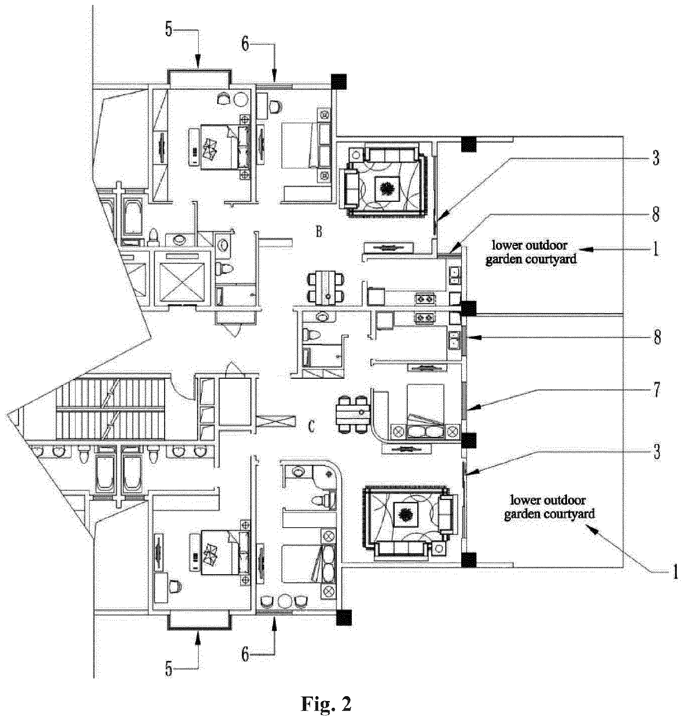

When a lower floor is arranged with lower outdoor garden courtyard 1, the corresponding upper floor is no longer arranged with upper outdoor garden courtyard 2. An upper floor is arranged with upper outdoor garden courtyard 2 only when corresponding lower floor is not arranged with lower outdoor garden courtyard 1, which results that the lower outdoor garden courtyard 1 and the lower outdoor garden courtyard 2 are each of a height identical to a two-story height of the urban forest high-rise villa (as shown in figure 2).

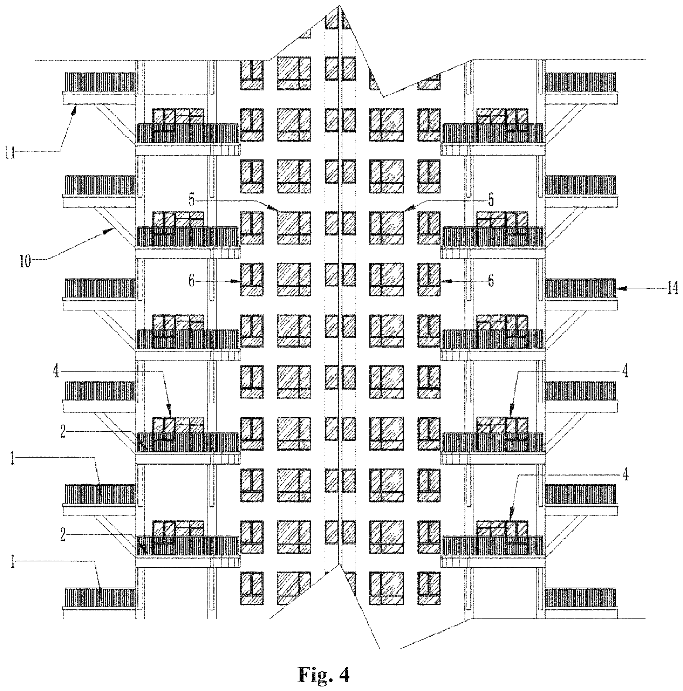

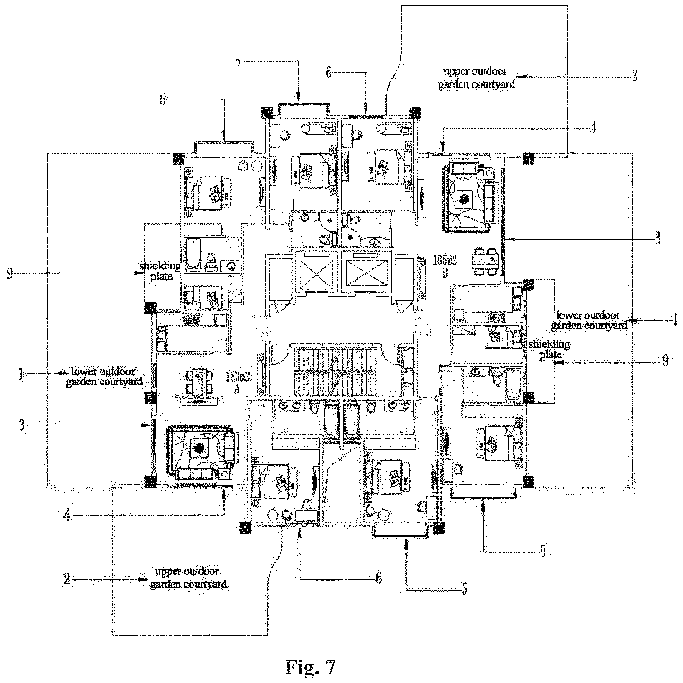

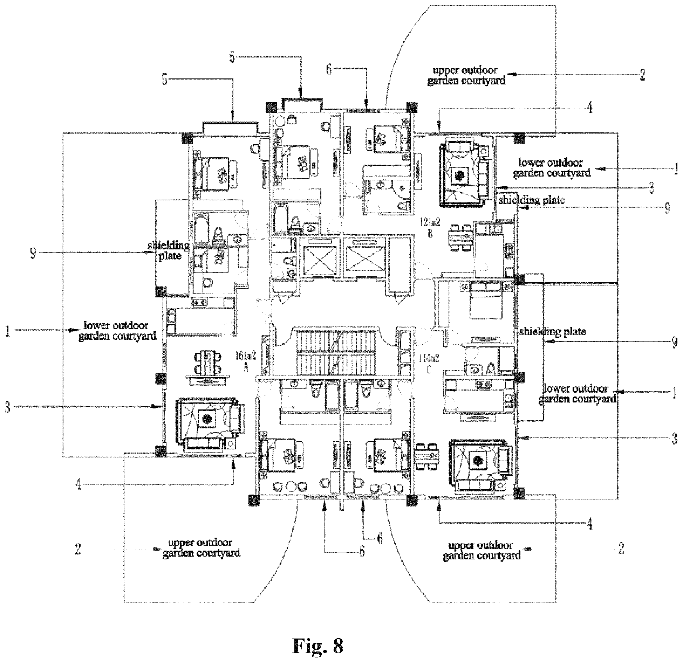

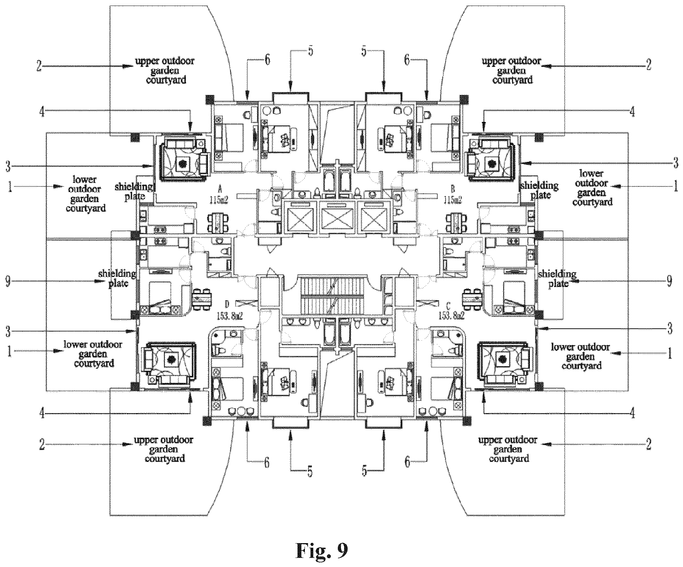

Referring to Figures 4, 7, 8 and 9, the floor located immediately above an external wall with window of a main room (such as living room, main bedroom) and the floors located immediately above an external wall with a window of a main room (such as living room, main bedroom) are not arranged with outdoor garden courtyards, to achieve direct lighting in the main room. However, when needed, a traditional one-story small balcony or a small platform may be arranged at the external wall with window of individual main room (referring to the No.5 window in apartment A and apartment B in figure 7, the No.5 window in apartment A in figure 8).

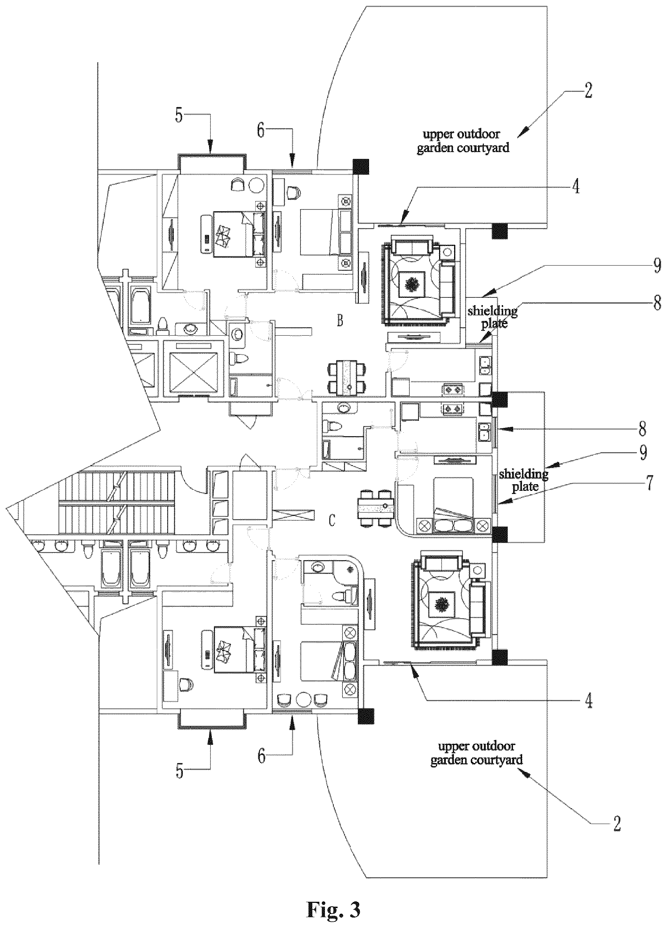

For example, the main room is bedroom. Referring to figure 3, the main bedroom window 5 and the main bedroom window 6 correspond to one bedroom respectively. The floors located immediately above or below the bedrooms are not arranged with outdoor garden courtyard. For example, the main room is living room, outdoor garden courtyards are arranged at floors that located immediately above a floor without window and located immediately below a floor without window. Similarly, the floor located below the external wall arranged with window is also not arranged with outdoor garden courtyard.

Referring to figure 2 and figure 3, the outdoor garden courtyards of a lower apartment and the corresponding upper apartment are arranged in different oration. The living room corresponding to the outdoor garden courtyards of the lower department and the living room corresponding to the outdoor garden courtyards of the upper department are arranged with door-and -windows for access to outdoor garden courtyard in different oration. It should be appreciated that the living room on the floor without the outdoor garden courtyard should not be arranged with window.

The resident in the next floor get in or out the lower outdoor garden courtyard 1through the door-and-window 3, and the resident in the upper floor get in or out the lower outdoor garden courtyard 2 through the door-and-window 4.

In this embodiment, interior room with window at the upper floor located immediately above outdoor garden courtyard and interior room with window at the lower floor located immediately below outdoor garden courtyard are utility rooms, such as kitchen, bathroom, worker's room, dressing room, storage room, etc. It should be appreciated that, in this embodiment, the specific use function of the utility rooms is not limited.

Referring to figure 1, the bottom of the windows 7 and 8 of the utility room (such as the worker's room and the kitchen) is 0.1 to 1.4 meters above the floor of the room. Shielding plates may be arranged below the windows 7 and 8, so as to block the downward line of sight and improve the privacy of lower outdoor garden courtyard.

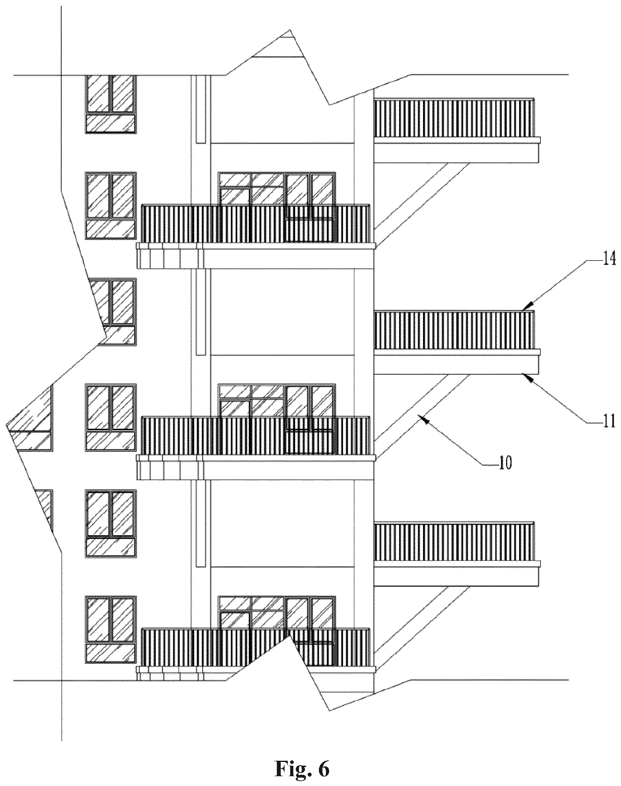

Referring to figure 6, the outdoor garden courtyard of the urban forest high-rise villa may extend outward from the external wall by 1 meter to 10 meters, and preferably 6 meters. A reinforced concrete floor slab of the outdoor garden courtyard is supported by a structure including a floor slab with a sunken type, an upstand beam, and a slanting column

In this embodiment, the support structure of the outdoor garden courtyard includes: a reinforced concrete floor slab with a sunken type, an upstand beam 11, a slanting column 10 supporting the outdoor garden courtyard, and a protective railing 14. The floor slab with a sunken type is flush with the upstand beam. The main function of the floor slab with a sunken type and the upstand beam is to facilitate the filling of soil in the outdoor garden courtyard. At the same time, the courtyard will still be lower than the interior of living room after filled with soil, which will bring convenience of the residents to get in and out the outdoor garden courtyard. There is a height difference between the bottom of the floor slab and the top of the upstand beam 11, preferably a height difference of 0.6 meter, for backfilling soil and planting flowers and trees. After the floor slab is leveled, the floor slab has a waterproof slope in the direction of the exterior wall of the villa, and a drain port is arranged at a space close to the wall with the lowest slope. After the floor slat is leveled, the floor slab of the outdoor garden courtyard is arranged with permanent waterproof layer, and a waterproof protective layer of 3 cm ∼ 5 cm of fine stone is arranged on the waterproof layer, to prevent roots from falling underneath, destroying the waterproof layer.

Referring to figure 6, the slanting column 10 is used for supporting the reinforced concrete floor and the upstand beam 11.

In this embodiment, wherein the number of the floors of the urban forest high-rise villa is cyclically set in accordance with the desired height of the urban forest high-rise villa. Each floor includes one, two, three, four, five, or six departments. And the size or area of each floor can still be changed if needed. The schematic diagram of floor including one, two, three, four, five, or six departments is shown in Figures 7-10. It should be appreciated that the number of the department and house type of floor are not limited.

Referring to figure 6, there are flowers, trees, garden courtyard road, landscape and leisure platform in the lower outdoor garden courtyard 1 and the upper outdoor garden courtyard 2. Flowers and trees should be selected to adapt to the local climatic conditions.

The flowers and trees includes: big trees, low plants, shrubs and flowers. The height of the big tree is from 3 meter to 5 meter. Upward tree pool with a size of 0.2-1 meter should be arranged under each big tree, and the preferable size is 0.5 meter, to increase the thickness of soil layer. The height of the low plants, shrubs and flowers is from 0.1meter to 3meter. Each outdoor garden courtyard is planted with 2-6 trees of 3 to 5 meters, 20 to 100 trees of 1 to 2 meters, and 100 to 400 plants of less than 1 meter, and several plants and flowers. Each big tree should be planted close to the outer wall and its trunk should be fixed on the outer wall to solve the problem of high-rise wind protection. The small tree, plant and flowers can be fixed with soil.

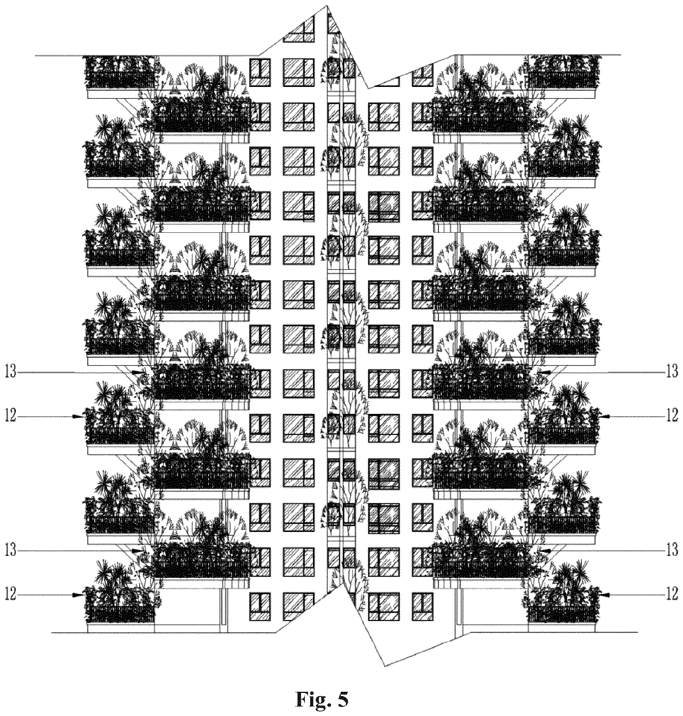

Referring to figure 5, flowers and trees 12 planted in the lower outdoor garden courtyard 1 and flowers and trees 13 planted in the upper outdoor garden courtyard 1 jointly green a whole urban forest high-rise villa. The urban forest high-rise looks like a lush mountain peak.

Preferably, the green garden area of the above outdoor garden courtyard is between 20 square meters and 120 square meters, and a protective railing 14 should be provided at the outer edge of the garden courtyard. The outdoor garden courtyard protective railing 14 is used to protect people and objects in the outdoor garden courtyard from falling high altitude.

Preferably, the urban forest high-rise vial is provided with an automatic trickling or sprinkling system and a drainage system arranged in the outdoor garden courtyard. All of the plants and flowers in the garden courtyard should be watered by the automatic trickling or sprinkling system and a drainage system, so as to reduce maintenance costs and automatic maintenance when no one is at home.

The lower outdoor garden courtyard is at odd-numbered floor, the upper outdoor garden courtyard is at even-numbered floor. All of the external walls of the urban forest high-rise villa are arranged with outdoor garden courtyard only, and the traditional balcony platform is no longer arranged.

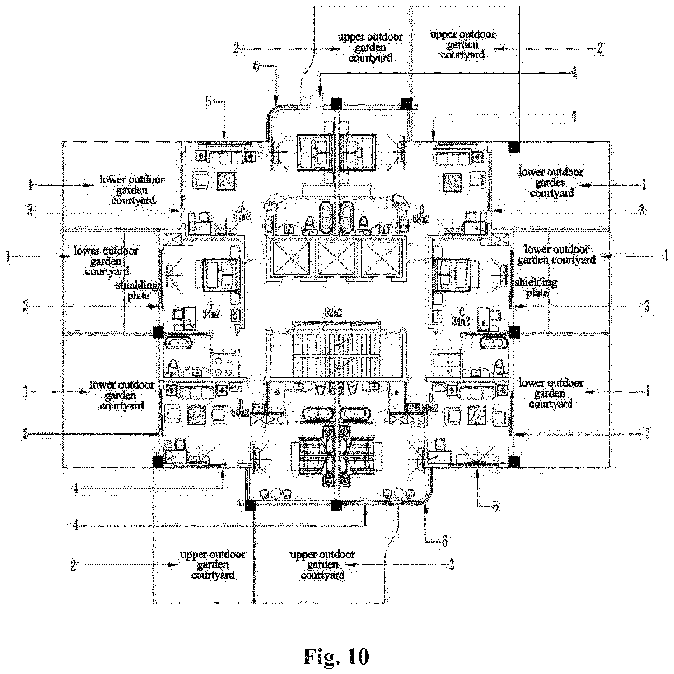

Referring to figure 7 and figure 10, in the embodiment of the present disclosure, the outdoor garden courtyard of floors comprising two, three, four and six departments are arranged at different oration. All of the designed main rooms are directly light through the window 5, 6 of main bedrooms. A shielding plate is arranged below the window of the external wall which is located immediately above the outdoor garden courtyard, and the corresponding rooms are all used as utility rooms, such as kitchen, worker's room and bathroom, etc. The outdoor garden courtyard can be divided into two garden courtyards or three garden courtyards, as shown by reference numeral 1 in Figures 7, 8, 9, and 10. It should be appreciated that the lower outdoor garden courtyard may be arranged at even-numbered floor, the upper outdoor garden courtyard may be arranged at the odd-numbered floor. This will not have any impact on the structural principles and technical requirements of the present disclosure.

Preferably, the above-mentioned urban forest high-rise villa may be one of residential, apartment, guesthouse, hotel, restaurant and office building .

While exemplary embodiments are described above, it is not intended that these embodiments describe all possible forms of the invention. Rather, the words used in the specification are words of description rather than limitation, and it is understood that various changes may be made without departing from the spirit and scope of the invention. Additionally, the features of various implementing embodiments may be combined to form further embodiments of the invention.

## Claims

1. An urban forest high-rise villa, comprising: outdoor garden courtyards;
wherein the outdoor garden courtyards include: lower outdoor garden courtyards and upper outdoor garden courtyards; the lower outdoor garden courtyard of a lower floor and the upper outdoor garden courtyard of a upper floor located immediately above the lower outdoor garden courtyard are arranged in different oration or in a staggered manner, the lower outdoor garden courtyard and the upper outdoor garden courtyard are each of a height identical to a two-story height of the urban forest high-rise villa;
wherein one floor located immediately above a window of each main room and one floor located immediately below the window of each main room are not arranged with outdoor garden courtyards, to achieve direct lighting in the main room.

2. The urban forest garden high-rise villa according to claim 1, wherein the outdoor garden courtyards are cyclically arranged according to house type, number of resident and the number of floor of the urban forest high-rise villa;
the lower outdoor garden courtyard of the lower floor and the upper outdoor garden courtyard of the upper floor located immediately above the lower outdoor garden courtyard are arranged in different oration is implemented by: an external wall of room of the lower floor and an external wall of room of the upper floor that located immediately above the lower floor are arranged with door-and-windows in different oration which are used to get in or out the upper outdoor courtyard and the lower outdoor courtyard.

3. The urban forest garden high-rise villa according to claim 1, wherein interior room with window at the upper floor located immediately above outdoor garden courtyard and interior room with window at the lower floor located immediately below outdoor garden courtyard are utility rooms.

4. The urban forest garden high-rise villa according to claim 3, wherein the bottom of the window of the utility room is 0.1 meters to 1.4 meters above the floor of the utility room, a shielding plate is arranged below the window to block the downward line of sight and improve the privacy of the outdoor garden courtyard.

5. The urban forest garden high-rise villa according to claim 1, wherein, the outdoor garden courtyard extends outward from the external wall by 1 to 10 meters, and is supported by a structure comprising a floor slab with a sunken type, an upstand beam, and a slanting column.

6. The urban forest garden high-rise villa according to claim 1, wherein after a floor slab with a sunken type of the outdoor garden courtyard is leveled, the floor slab has a waterproof slope in the direction of the exterior wall of the villa, and a drain port is arranged at a space close to the wall with the lowest slope.

7. The urban forest garden high-rise villa according to claim 1, wherein, a floor slab of the outdoor garden courtyard is arranged with permanent waterproof layer, and a waterproof protective layer of 3 cm to 5 cm of fine stone is arranged on the waterproof layer, to prevent roots from falling underneath, destroying the waterproof layer.

8. The urban forest garden high-rise villa according to claim 1, wherein, in a structure comprising a floor slab with a sunken type and an upstand beam of the outdoor garden courtyard, there is a height difference between the bottom of the floor slab and the top of the upstand beam, for backfilling soil and planting flowers and trees.

9. The urban forest garden high-rise villa according to claim 1, wherein the urban forest high-rise villa includes one or more of flowers and trees, garden courtyard road, landscape and leisure platform.

10. The urban forest garden high-rise villa according to claim 9, wherein the flowers and trees includes: big trees, low plants, shrubs and flowers; wherein the height of the big trees is from 3 meter to 5 meter; an upward tree pool with a size of 0.2meters to 1meter is arranged under each big tree to increase the thickness of soil layer, the height of the low plants, shrubs and flowers is from 0.1meters to 3meters.

11. The urban forest garden high-rise villa according to claim 10, wherein, each outdoor garden courtyard is planted with 2-6 trees of 3meters to 5meters, 20 to 100 trees of 1meter to 2 meters, and 100 to 400 plants of less than 1 meter, and several plants and flowers, each big tree is planted close to the outer wall and its trunk is fixed on the outer wall.

12. The urban forest garden high-rise villa according to claim 1, wherein an area of outdoor garden courtyard is between 20 square meters and 120 square meters, and protective railing is provided at an outer edge of the garden courtyard.

13. The urban forest garden high-rise villa according to claim 1, wherein the urban forest garden high-rise villa is provided with an automatic trickling or sprinkling system and a drainage system.

14. The urban forest garden high-rise villa according to claim 1, wherein the lower outdoor garden courtyard is at odd-numbered floor, the upper outdoor garden courtyard is at even-numbered floor.

15. The urban forest garden high-rise villa according to claim 1, wherein the urban forest high-rise villa is one of residential, apartment, restaurant, hotel, guesthouse and office building.
